# EUROPEAN PATENT APPLICATION

(11) **EP 2 924 674 A1**
(43) Date of publication of application: **30.09.2015**
(21) Application number: 15161512.7
(22) Date of filing: 27.03.2015
(51) Int. Cl.: G09B 19/00, G09B 7/04

(54) **Adaptive cognitive skills assessment and training**

(30) Priority: 27.03.2014 US 201461971298 P; 26.03.2015 US 201514670239
(71) Applicant: MyCognition Limited, London EC2R 6AY (GB)
(72) Inventor: Harrison, John Edward, Wiltshire BA12 6QY (GB); Van Rijswijk, Jurriaan Hubrecht, Amsterdam 1018 DH (NL); Sparrowhawk, Kieron Thomas, London EC2R 6AY (GB); Knight, Duncan Andrew, London EC2R 6AY (GB)
(74) Representative: Wright, Howard Hugh Burnby

(57) **Abstract**

A method for cognitive assessment and adaptive cognitive skills training is disclosed. The method involves obtaining a plurality of test performance results associated with a user based on a plurality of tests, generating a training recipe based on the test performance results and at least one of a plurality of test weights and a plurality of baseline distributions, each corresponding to the plurality of tests, wherein the plurality of test weights comprises a weight assigned to a plurality of cognitive domains tested by the plurality of tests, identifying one of the plurality of cognitive domains of the user requiring improvement based on the test performance results, obtaining, via an online video game played by the user, activity performance results associated with the user based on a training round completed by the user, wherein the training round comprises a plurality of video game activities in the online video game selected using the training recipe and specifically targeted to the cognitive domain of the user requiring improvement.

## Description

### CROSS-REFERENCE TO RELATED ART

This application claims benefit to provisional application serial no. 61/971,298, filed on March 27, 2014, entitled Adaptive Cognitive Skills Training. The contents of the provisional application are incorporated by reference herein in their entirety.

This application contains subject matter that may be related to the subject matter in the following United States patents and patent publications: (i) U.S. Patent No. 6,565,359, entitled "Remote Computer-Implemented Methods for Cognitive and Perceptual Testing"; (*ii*) U.S. Patent No. 6,280,198, entitled "Remote Computer Implemented Methods for Cognitive Testing"; (*iii*) U.S. Patent Publication No. 2013/0101975, entitled "System and Method for Targeting Specific Benefits with Cognitive Training"; (*iv*) U.S. Patent Publication No. 2010/0240458, entitled Video Game Hardware Systems and Software Methods Using Electroencephalography; and (*v*) U.S. Patent Publication No. 2008/0171584, entitled "Cognitive Fitness".

This application contains subject matter that may be related to the subject matter in the following non-patent literature: (*i*) "Embedded Assessment Algorithms within Home-Based Cognitive Computer Game Exercises for Elders", Jimison et al., Conf. Proc. IEEE Eng. Med. Biol. Soc. 2006;1:6101-4; (*ii*) "Tailoring Serious Games with Adaptive Pedagogical Scenarios: A Serious Game for Persons with Cognitive Disabilities", Hussaan et al., International Conference on Advanced Learning Technologies (ICALT 2011); (*iii*) "Serious Games in Cognitive Training for Alzheimer's Patients", Imbeault et al., Serious Games and Applications for Health (SeGAH), 2011 IEEE 1st International Conference, 16-18 Nov. 2011; and (*iv*) "Computer-Based, Personalized Cognitive Training Versus Classical Computer Games: a Randomized Double-Blind Prospective Trial of Cognitive Stimulation", Peretz et al., Neuroepidemiology 2011;36(2):91-9. doi: 10.1159/000323950. Epub 2011 Feb 10.

### BACKGROUND

Cognition is the ability to think, learn, respond and remember. A healthy cognition enables humans to efficiently receive, understand, store, retrieve and use information, ensuring a more fulfilled, productive and independent life. A poor cognition can lead to serious diseases or disorders and it is a common symptom in many neuropsychiatric diseases and neurodegenerative disorders. Cognitive health can be measured using online assessments. In addition, cognition can be trained to function more effectively at any stage of life because the brain is neuroplastic. Neuronal pathways can be trained to grow and strengthen using cognitive training.

### BRIEF DESCRIPTION OF DRAWINGS

FIG. 1 shows a computing system in accordance with one or more embodiments of the invention.
FIG. 2 shows a schematic diagram in accordance with one or more embodiments of the invention.
FIG. 3 shows a flowchart in accordance with one or more embodiments of the invention.
FIG. 4 shows a flowchart in accordance with one or more embodiments of the invention.

### SUMMARY

In general, aspects of the invention include a method, a system, and a computer-readable medium for performing one or more of the following steps, without limitation: obtaining a plurality of test performance results associated with a user based on a plurality of tests completed by the user, generating a training recipe based on the test performance results and at least one selected from a group consisting of a plurality of test weights and a plurality of baseline distributions, each corresponding to the plurality of tests, wherein the plurality of test weights comprises a weight assigned to a plurality of cognitive domains tested by the plurality of tests, identifying one of the plurality of cognitive domains of the user requiring improvement based on the test performance results, obtaining, via an online video game played by the user, activity performance results associated with the user based on a training round completed by the user, wherein the training round comprises a plurality of video game activities in the online video game selected using the training recipe and specifically targeted to the cognitive domain of the user requiring improvement, and presenting a report indicating a change in the cognitive domain of the user based on the plurality of tests and the plurality of activities.

### DETAILED DESCRIPTION

Specific embodiments of the invention will now be described in detail with reference to the accompanying figures. Like elements in the various figures are denoted by like reference numerals for consistency.

In the following detailed description of embodiments of the invention, numerous specific details are set forth in order to provide a more thorough understanding of the invention. However, it will be apparent to one of ordinary skill in the art that the invention may be practiced without these specific details. In other instances, well-known features have not been described in detail to avoid unnecessarily complicating the description.

In general, embodiments of the invention provide a system and computer readable medium for the customized assessment and training of cognitive skills adapted to a user's cognitive strengths and weaknesses and ongoing cognitive development. Cognitive skills trained by one or more embodiments of the invention may include skills related to one or more cognitive domains, including, for example and without limitation, working memory, episodic memory, attention (including sustained attention, divided attention, and selective attention), psychomotor speed, and executive function.

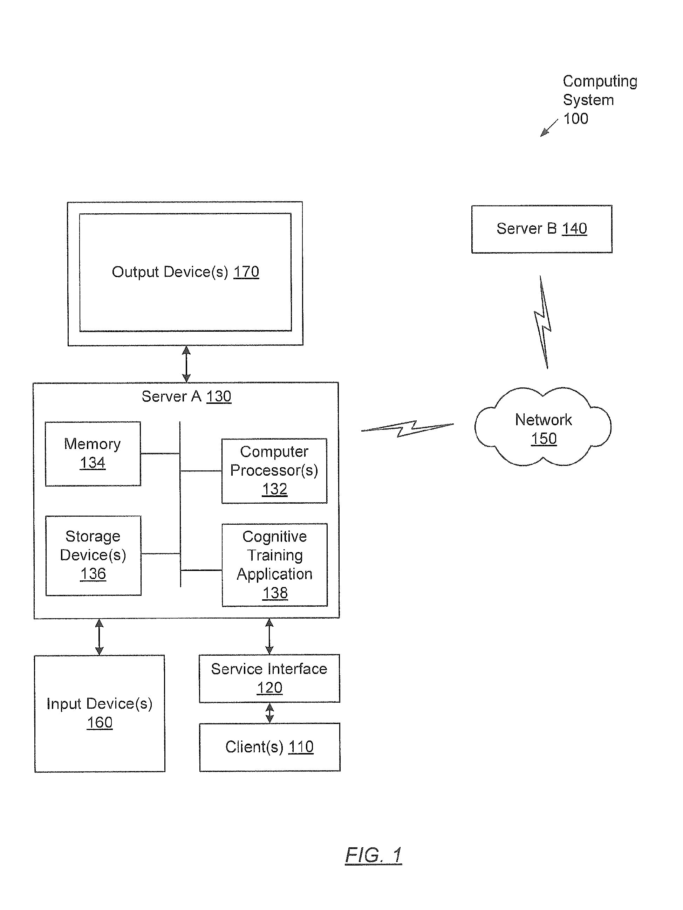

FIG. 1 shows a computing system in accordance with one or more embodiments of the invention. The computing system (100) may include one or more clients (110), a service interface (120), a first server (130), a second server (140), a network (150), one or more input devices (160), and one or more output devices (170). Each of these components is described below.

In one or more embodiments of the invention, each client (110) corresponds to a remote system configured to interface with the service interface (120). The client (110) may be any mobile device (*e*.*g*., smart phone, iPad, tablet computer, laptop) or any non-mobile computing device (*e.g*. desktop) with functionality to interface with the service interface (120), including, for example, a web browser or standalone application and a network connection. A client (110) may be operated by an employer, an agent or representative of an employer, or a third party (*e*.*g*., a participant in a clinical trial).

In one or more embodiments of the invention, the service interface (120) includes functionality to interface with clients (110) and communicate with one or more servers. In one or more embodiments of the invention, the service interface (120) may be implemented as a web server configured to serve web pages to the client (110) and to receive input from the client (110) via the client's web browser and/or a standalone application. In one or more embodiments of the invention, if the client (110) is executing a web browser to interface with the service interface (120), then the service interface (120) may include the web pages to send to the client (110). Upon receipt of input from the client (110), the service interface (120) may be configured to extract and, if desired, modify the input prior to sending the input to a server. Similarly, upon receipt of data from a server, the service interface (120) may be configured to perform the desired formatting of such data prior to sending the formatted data to the client (110). In one or more embodiments of the invention, the service interface (120) may interact with multiple clients (110) simultaneously. The service interface (120) may include an application programming interface ("API") and/or any number of other components used for communicating with entities outside of the computing system (100). The API may include any number of specifications for making requests from and/or providing data to the computing system (100).

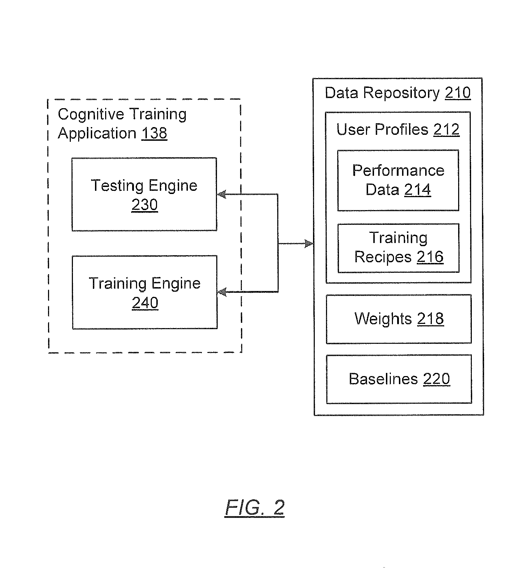

In one or more embodiments of the invention, the first server (130) and/or the second server (140) may include one or more computer processor(s) (132), associated memory (134) (*e*.*g*., random access memory (RAM), cache memory, flash memory, etc.), one or more storage devices (136) (*e*.*g*., hard disk, optical drive such as a compact disk (CD) drive or digital versatile disk (DVD) drive, flash memory stick, etc.), and a cognitive training application (138) (described further in the discussion of FIG. 2 below). In one or more embodiments of the invention, the processor(s) (132) may be configured to feed cognition test results into a video game that is linked to the cognitive training application (138).

In one or more embodiments of the invention, the first server (130) and/or the second server (140) may be implemented on virtually any type of computing system regardless of the platform being used. For example, a server may include one or more mobile devices (e.g., laptop computer, smart phone, personal digital assistant, tablet computer, or other mobile device), desktop computers, servers, blades in a server chassis, or any other type of computing device or devices that includes at least the minimum processing power, memory, and input and output device(s) to perform one or more embodiments of the invention.

In one or more embodiments of the invention, the computer processor(s) (132) may be an integrated circuit for processing instructions. For example, the computer processor(s) (132) may be one or more cores, or micro-cores of a processor.

In one or more embodiments of the invention, the network (150) may include functionality to communicate with the first server (130), the second server (140), and/or one or more other server(s) via a network interface connection (not shown). The network may be a local area network (LAN), wide area network (WAN) such as the Internet, mobile network, or any other type of network. In one or more embodiments of the invention, the network (150) may be used to connect to one or more websites which offer psychological testing for obtaining human brain cognition strengths and weaknesses and/or online video games which target human brain cognition improvement and efficiency.

In one or more embodiments of the invention, the input device(s) (160) may be a touchscreen, keyboard, mouse, microphone, touchpad, electronic pen, or any other type of input device. In one or more embodiments of the invention, the input device(s) (170) may be a screen (*e.g*., a liquid crystal display (LCD), a plasma display, touchscreen, cathode ray tube (CRT) monitor, projector, or other display device), a printer, external storage, or any other output device. One or more of the input device(s) (170) may be the same or different from the input device(s) (160). The input device(s) (160) and input device(s) (170) may be locally or remotely (*e*.*g*., via the network) connected to the computer processor(s) (132), memory (134), and storage device(s) (136). Many different types of computing systems exist, and the aforementioned input device(s) (160) and input device(s) (170) may take other forms.

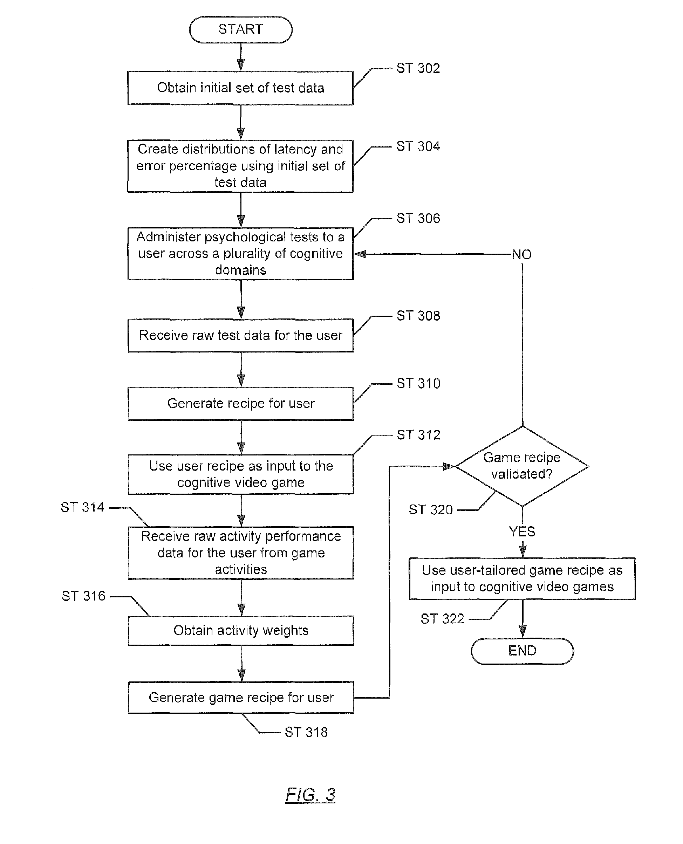

Software instructions in the form of computer readable program code to perform embodiments of the invention may be stored, in whole or in part, temporarily or permanently, on a non-transitory computer readable medium such as a CD, DVD, storage device, a diskette, a tape, flash memory, physical memory, or any other computer readable storage medium. Specifically, the software instructions may correspond to computer readable program code that when executed by a processor(s), is configured to perform embodiments of the invention. In one or more embodiments of the invention, the software instructions may be stored on such a medium in a secure location. In one or more embodiments, such software instructions may include unique algorithms to normalize the measurement of cognition and link such measurements with video games to stimulate the human brain where there is a deficit or weakness of cognition. The method executed by such software instructions is discussed further in Figs. 3-4 below.

Further, one or more elements of the aforementioned computing system may be located at a remote location and connected to the other elements over a network. Further, embodiments of the invention may be implemented on a distributed system having a plurality of nodes, where each portion of the invention may be located on a different node within the distributed system. In one embodiment of the invention, the node corresponds to a distinct computing device. Alternatively, the node may correspond to a computer processor with associated physical memory. The node may alternatively correspond to a computer processor or micro-core of a computer processor with shared memory and/or resources.

In one or more embodiments of the invention, a cognitive training application (138) resides and executes on server A (130). The cognitive training application (138) may be connected to via the network (150). The cognitive training application (138) is an assessment tool that measures cognition across the five cognitive domains. The cognitive training application (138) is discussed in detail in FIG. 2 below.

While FIG. 1 shows a configuration of components, other configurations may be used without departing from the scope of the invention. For example, various components may be combined to create a single component. As another example, the functionality performed by a single component may be performed by two or more components.

FIG. 2 shows a schematic diagram in accordance with one or more embodiments of the invention. The diagram includes the cognitive training application (138) and a data repository (210). Each of these components is described below.

In one or more embodiments of the invention, the cognitive training application (138) may include functionality to store data in and retrieve data from the data repository (210). The cognitive training application (138) may include functionality to communicate with, for example and without limitation, one or more storage device(s) (136), the network (150), and/or the service interface (120).

In one or more embodiments of the invention, the cognitive training application (138) includes a testing engine (230) and a training engine (240). Each of these components is described below.

In one or more embodiments of the invention, the testing engine (230) may be configured to administer a series of tests to a user to assess the user's initial strengths and/or weaknesses relating to the cognitive domains. The series of tests may be psychological tests (psychometric tests) that test one or more of five cognitive domains: working memory, episodic memory, attention, psychomotor speed, and executive function. Each cognitive domain may be associated with one or more tests, and each test may measure performance in one or more cognitive domains. As an example, and without limitation, the testing engine (230) may administer to the user one or more of the following test types: simple reaction time, choice reaction time, go or no-go reaction, visual memory, verbal memory, n-back, coding task, and trail making. The above-listed tests may include one or more sub-tests. In one or more embodiments of the invention, a standard series of tests may be administered to a user without regard to any prior measurement of the user's cognitive strengths and/or weaknesses. The administering of the series of tests may be web-based, such that the user to which the tests are administered connects over a network to a website, provides user credentials to log into the website, and tasks the series of tests online via the website. The testing engine (230) may be configured to provide to a user one or more test reports corresponding to the user's test performance.

In one or more embodiments of the invention, the training engine (240) may be configured to administer to a user one or more training rounds, each round including a series of activities, in order to assess the user's developing strengths relating to the cognitive domains. Each cognitive domain may be associated with one or more activities, and each activity may measure performance in one or more cognitive domains. The training engine (240) may administer to the user one or more activities corresponding to the one or more tests administered by the testing engine. Activities may include one or more sub-activities. The training engine (240) may adapt the combination of activities administered to the user in real-time. Performance data based on a user's activity performance may include one or more scores for the various activities administered by the training engine (240) and/or an overall score. In one or more embodiments of the invention, a standard series of activities may be administered to a user without regard to any prior measurement of the user's cognitive strengths. In one or more embodiments of the invention, activities chosen to be administered to a user in a training round may be based on a training recipe tailored to the user's performance on previously administered tests and/or activities. The training engine (240) may be configured to provide to a user one or more training reports corresponding to the user's activity performance.

In one or more embodiments of the invention, the data repository (210) is one or more of any type of storage unit and/or device *(e.g.,* a file system, database, collection of tables, etc.) for storing data. The multiple different storage units and/or devices may or may not be of the same type or located at the same physical site, and may store data in one or more secure locations. In one or more embodiments of the invention, the data repository is resident on the storage device(s) of the first server (130) and/or the second server (140).

In one or more embodiments of the invention, the data repository (210) may store support data for the cognitive training application (138), including user profiles (212) (including performance data (214) and training recipes (216)), and weights (218) and baselines (220) for various tests and activities. Each of these components is described below. In one or more embodiments of the invention, the data repository (210) may store support data for the testing engine (230) and support data for the training engine (240). Support data for the testing engine (230) may include data used in the administration of tests to users. Support data for the training engine (240) may include data used in the administration of training rounds to users.

In one or more embodiments of the invention, user profiles (212) store information about one or more users of the cognitive training application (138). In one or more embodiments of the invention, user profile (212) data and any related information (*e*.*g*., performance data (214), training recipes (216), *etc*.) may be stored securely and in accordance with data protection laws. In one or more embodiments of the invention, each user profile (212) is associated with an individual. Each user profile (212) may include one or more of the following fields: (*i*) a user ID configured to store a unique numeric, alpha, or alphanumeric value to uniquely identify the user with the system; (*ii*) name information configured to store the name of the user; (*iii*) contact information configured to store the user's contact information (*e*.*g*., e-mail addresses, postal addresses, phone numbers, FACEBOOK username, TWITTER handle, etc.); (*iv*) biographical information configured to store the user's biographical information (*e*.*g*., age, gender, education level, etc.), and (*v*) user preferences configured to store various preferences related to how the user desires to interact with various portions of the system *(e.g.,* the user prefers to receive test reports via e-mail). Those skilled in the art will appreciate that in a given user profile (212), one or more of the aforementioned fields may not be completed.

In one or more embodiments of the invention, each user profile (212) may store performance data (214) for the user. Performance data (214) may include information related to the user's performance on various tests and activities provided to the user via the testing engine (230) and the training engine (240), respectively. Performance data based on a user's test performance may include one or more scores for the various tests and/or activities administered by the testing engine (230) and the training engine (240), a combined test score, a combined activity score, and/or an overall score. Performance data (214) may include data relating to a user's latency respond to test stimuli and/or the number of errors made by the user. In one or more embodiments of the invention, the latency and error percentage are measured from the user's computer keystrokes or mouse clicks in the psychological tests administered to the user. Latency and error percentage correspond to speed and accuracy, respectively. Keystrokes include touch input for a touchscreen device, such as an iPad or any other touchscreen device.

In one or more embodiments of the invention, each user profile (212) may store one or more training recipes (216) for the user. A training recipe (216) may provide the basis for a training round administered to the user, where the training round includes a combination of one or more activities, where the activities are determined based on one or more factors. For example, and without limitation, such factors may include test weights, activity weights, test baselines, activity baselines, a user's test performance data, and/or a user's activity performance data. A training recipe (216) may be updated in real-time as a user participates in a training round, and in turn, the training round may adapt to the training recipe in real-time by adjusting the activities administered to the user.

In one or more embodiments of the invention, weights (218) include test weights and activity weights. Based on the test weights, the data from psychological tests administered to the user can be analyzed and modified in order to appropriately assess the user's strengths in the various cognitive domains. A given test may be assigned a weight that indicates the test's accuracy in determining a user's cognitive strength in a number of cognitive domains relative to other tests in the test battery. In one or more embodiments of the invention, the test weights are monitored and assigned by experts in the field. For example, psychological experts choose the weighting of the psychological test activities administered to the user whose cognition is being analyzed. Based on the test weights, the data from video gaming activities is analyzed and a corresponding second set of weights for the gaming activities is generated/calculated. This creates a model to measure cognition with the video game. The activity weights are then modified in order to appropriately assess the user's strengths in the various cognitive domains. A given activity may be assigned a weight that indicates the test's accuracy in determining a user's cognitive strength in a number of cognitive domains relative to other activities in the training round. In one or more embodiments of the invention, test weighting may be reassessed periodically by experts (*e*.*g*., cognitive neuropsychologists) as additional user data becomes available. For example, after testing and training rounds are administered to one thousand users, the users' performance data and/or other information may be aggregated and provided to experts so that future tests and training rounds may be calibrated using more recently obtained results. The below table shows an example of proposed weights for 8 psychological tests for the five cognitive domains. Specifically, in Table 1 below, various expert monitored weights are assigned to the five cognitive domains for tests titled simple reaction time, choice reaction time, go/no go, visual memory, verbal memory, N-back, coding task, and trail making. With the computerization of the psychological/psychometric tests, it is possible in most of them to measure latency and errors when completing the test, which as a result measures speed and accuracy. Accordingly, Table 1 shows the unique weightings given for each test.

**TABLE 1. Latency and Error % Weights**

| \Domain | **WM** | **EM** | **A** | **PMS** | **EF** |
|---|---|---|---|---|---|
| **Simple reaction time** | | | | | |
| Latency | | | 0,6 | 1 | |
| Error percentage | | | 0,1 | 0,2 | |
| | | | | | |

| **Choice reaction time** | | | | | |
|---|---|---|---|---|---|
| Latency | | | 0,8 | 0,8 | |
| Error percentage | | | 0,15 | 0,15 | |
| | | | | | |

| **Go / no go** | | | | | |
|---|---|---|---|---|---|
| Latency | | 0,5 | 1 | 0,6 | 1 |
| Error percentage | | 1 | 0,2 | 0,1 | 0,5 |
| | | | | | |

| **visual memory** | | | | | |
|---|---|---|---|---|---|
| Latency | | 0,5 | | | |
| Error percentage | | 1 | | | |
| | | | | | |

| **Verbal memory** | | | | | |
|---|---|---|---|---|---|
| Latency | | | | | |
| Error percentage | | | | | |
| | | | | | |

| **N-black** | | | | | |
|---|---|---|---|---|---|
| Latency | 0,5 | | | | 0,5 |
| Error percentage | 1 | | | | 1 |
| | | | | | |

| **Coding task** | | | | | |
|---|---|---|---|---|---|
| Latency | 0 | | | | |
| Error percentage | 1 | | | | |
| | | | | | |

| **Trail making** | | | | | |
|---|---|---|---|---|---|
| Latency | | | | | 0,1 |
| Error percentage | | | | | 1 |

Those of ordinary skill in the art will appreciate that for each activity in the individual psychological tests administered to a user, a weight is defined for all domains, denoting the impact the latency and error have on a particular domain. For example, in Table 1 above, for the test of simple reaction time, for the attention cognitive domain (A), latency impacts the test score more than the error percentage, denoted by the 0,6 weight assigned to latency vs. the 0,1 weight assigned to error percentage. Some activities may only impact a single cognitive domain, while others impact multiple cognitive domains.

Continuing with FIG. 2, in one or more embodiments of the invention, baselines (220) include one or more test baselines and one or more activity baselines. Baselines (220) include information relating the test performance and training performance of multiple users, so that, using the baselines (220), individual users' performance data may be normalized with respect to other users in order to generate more accurately-tailored training recipes (216). As an example, in one or more embodiments of the invention, experts such as those mentioned above may conduct this process.

While FIG. 2 shows a configuration of components, other configurations may be used without departing from the scope of the invention. For example, various components may be combined to create a single component. As another example, the functionality performed by a single component may be performed by two or more components.

FIG. 3 shows a method for adaptive cognitive skills training in accordance with one or more embodiments of the invention. While the various steps in this flowchart are presented and described sequentially, one of ordinary skill will appreciate that some or all of the steps may be executed in different orders, may be combined or omitted, and some or all of the steps may be executed in parallel.

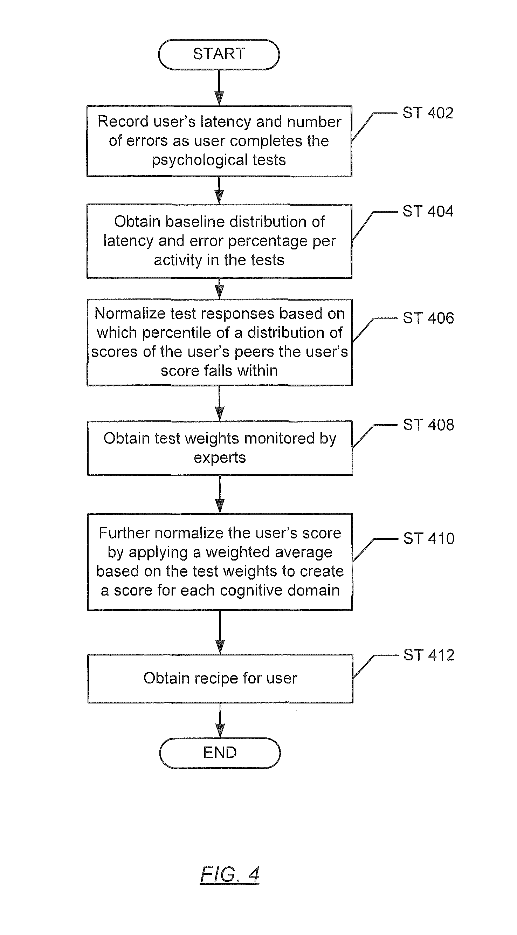

In Step 302, an initial set of test data is acquired. The initial set of test data is acquired by administering tests to the general population to obtain an initial set of data to which a particular's user's test performance data is compared to, to determine where within the normal range of responses the user falls. Using this initial set of test data, distributions of each test activity are created in Step 304. In one or more embodiments of the invention, the distribution created for each test administered to the general population is a binomial distribution. These distributions are used to create an individual user recipe for obtaining the user's cognitive health score, as will be described in FIG. 4 below. The distributions for latency and error percentage for each of the test activities may be stored in the data repository as baselines, as described earlier in FIG. 2.

Once an initial data set is obtained, one or more tests are administered to a particular user to obtain test performance data for the user in Step 306. The test may be administered at the client and test performance data may be altered, processed, or otherwise manipulated at the client. The tests are psychological tests (psychometric tests) designed to measure cognitive ability in the five specific cognitive domains of the human brain. In one or more embodiments of the invention, there are 10 psychological tests administered to a user: simple reaction time, choice reaction time, go/no go reaction test, visual memory test, verbal memory test, 1-Back, 2-Back, coding task, trail making A, and trail making B. Those of ordinary skill in the art will appreciate that the number and types of tests can vary, and the above examples do not limit the invention. It requires skill and expertise to design a set of tests and it requires trials of the sets in users to determine whether the set is functioning as desired. Each set of tests is unique and there is risk in any set not performing the desired function.

In one or more embodiments of the invention, test performance data collected for an individual user may include the duration of the test or test activity, the type of test activity, the number of trials required to be completed by the user for each test activity, the expected number of trials, the mean latency for that test activity, the standard deviation from the mean latency, the min and max latency, the median latency, and the error percentage for that test activity. The mean, median, and some of the other data recorded for each test is obtained from the initial data set obtained in Step 302.

In Step 308, the raw test performance data based on the user's performance in the tests administered in ST 306 is received at a server. In Step 310, a recipe for determining a normalized cognitive health score for the user is generated. The user recipe is unique to that particular user, and the algorithm for obtaining this recipe is described in FIG. 4. The user's recipe may be generated based on the test performance data for the user, the test weights, and/or test baselines stored in the repository. FIG. 4 shows a method for generating a recipe as recited in STs 310 and 318 of FIG. 3 in accordance with one or more embodiments of the invention. While the various steps in this flowchart are presented and described sequentially, one of ordinary skill will appreciate that some or all of the steps may be executed in different orders, may be combined or omitted, and some or all of the steps may be executed in parallel.

Thus, turning to FIG. 4, a recipe is obtained by initially recording the user's latency and number of errors for each of the psychological tests (psychometric tests) administered to the user (ST 402). Next, a baseline distribution of latency and error percentage for each test activity is obtained in Step 404. This baseline distribution is obtained from the data collected in Step 302 and as described in Step 304. The test responses of the user for latency and error percentage are then normalized a first time in Step 406, based on which percentile (bottom 10%, 50%, top 25%, etc.) of a distribution of scores of the user's peers (in the general population initial test data set) the user's score falls within. For example, the bottom 10% = 10, bottom 20% = 20, ... and so on, all the way to the top 10% = 100. Said another way, the distribution of the score of a group of the user's peers is used to create a normalized score from 1-100. Thus, if user does five (5) activities, a total of 10 normalized scores between 1-100 are obtained for the user, one for latency and the other for error percentage.

In step 410, a weighted average is then applied to these normalized scores to obtain a score across all five cognitive domains. The weighted average is computed based on test weights obtained in Step 408. As described above, the test weights are assigned and monitored by experts in the field, such as for example, psychological experts, and are stored in the data repository accessible by the cognitive training application. Finally, in Step 412, a recipe or cognitive health score for each domain for the user is obtained. In one or more embodiments of the invention, an average cognitive health score across all five cognitive domains may also be obtained. The test weights may be obtained from the first server, the second server, and/or the client. The test weights may be predetermined or may be computed during or after test administration.

Those skilled in the art will appreciate that the more data that is collected in the initial test data phase of collection from the general population, the more personal a user's recipe may be. As the engine collects more data, it is able to calculate distributions based on the user profile, taking into account for example, age, gender, education level, etc., in order to generate a more tailored recipe through the process described in FIG. 4. Further, those of ordinary skill would readily understand that recipes generated from different distributions are not comparable to each other; rather, only recipes created from the same distributions may be compared with each other.

In one or more embodiments, based on the recipe (or one or more cognitive health scores) obtained from the process of FIG. 4, cognitive domains in which a particular user falls behind the scores of his/her peers can be readily identified. In other words, a recipe allows stimulation to be targeted to those domains where an individual has weaknesses or deficits in their cognition. The present invention trains all cognitive domains holistically, but targets stimulation of such weaker cognitive areas with more intense training through video games which have cognition activities embedded within them. The user is being taken out of their comfort zone by the intense training where they have most cognitive need. For this reason, the training is embedded in a video game to encourage engagement with the training. Thus, the output of the process of FIG. 4 is used to tailor video game activities to improve one or more cognitive areas identified by the user's recipe as weaker than those of the user's peers.

Returning to FIG. 3, once a user recipe is generated, the user recipe is used in Step 312 as an input to one or more cognitive video games played by the user. More specifically, the normalized output of the user's test performance is used to compare the user's competence within the video game activities. Video game activities include maneuvers and actions which embed cognitive training exercising the same five cognitive domains that were tested by the psychometric tests applied in Step 306. For example, a video game may require remembering, identifying, and catching monsters while navigating through a treacherous environmental setting, or selectively taking the photograph of fish in specific underwater settings. Over time, data is collected such that it becomes possible to observe/see which aspects of gameplay apply specifically to the test performance data of the user. A user's trajectory can be plotted/mapped to determine where a user falls within the collected data. The video game activities are linked to the cognitive training application and the test results, which are fed into the game via a processor. Activity performance data for the user may be obtained during the second training round and may form the basis for a new training recipe, a new training report, and a new training round, *ad infinitum.*

In Step 314, the raw activity performance data for the user is obtained from the video game activities played in ST 312. At this stage, in Step 316, activity weights are obtained to apply to the video game activity performance data. The activity weights may be the same as or different from the weights applied to each cognitive domain by the experts for the test activity. In one or more embodiments of the invention, any suitable fit algorithm may be applied to the weights of the psychological testing to determine the weights of the video game activities. For example, a best fit or a least squares fit algorithm may be applied to determine how the weights of the psychological tests are applied to the video gaming activities. In Step 318, a game recipe is generated for the user, based on the video game activity weights and the cognitive health score obtained from the psychological tests administered to the user. This game recipe recipe may be used to generate a training report including activity results for the user.

Those of ordinary skill in the art would appreciate that the game recipe generated in Step 318 may be generated much in the same manner described in FIG. 4. That is, game activity distributions are obtained in advanced, and user's performance in each game activity is compared to the performance of user's peers to determine where in the spectrum the user's game score lies, including measuring the latency (speed) and the error percentage (accuracy) in each game activity. There may also be game baselines stored in the repository from data collected over time for the general population's performance in the video game activities. The user's game activity scores may be normalized as well, and a weighted average may be computed for each of the plurality of cognitive domains. In one or more embodiments of the invention, the user's game score is correlated with the psychological test scores using the various weights. The weights applied to the game activities may also be assessed periodically and adjusted based on user game activity performance data.

In Step 320, a determination is made as to whether the game activity recipe is validated. The process of validation occurs by correlating game scores with the assessment scores from the psychological (psychometric) testing. Over time, when sufficient data is collected in the gaming activities and mapped to the various tasks in the psychological (psychometric) testing, the game results themselves are sufficient to give an assessment of a user's cognition health, and the administration of the psychological tests can be limited to occasional recalibration. Rather, the user-specific game recipes may be used as inputs the cognitive video games, as in Step 322. Said another way, specifically, over time, sufficient data may be obtained so as adjust game scores of a user to assess whether a user's cognition is improving.

The collected data is then used to update the distributions and adjust the weights applied, if necessary to keep the data as within the limits of a general population that was administered the same tests. The recipe is updated iteratively as the user performs in the gaming activities, i.e., the video games are a proxy for cognitive functioning. In other words, the processes described in FIG. 3 and 4 are iterative, and are repeated for each user and for each cognitive domain. Further, as more data points are obtained, the outputs of the psychological (psychometric) testing can be compared to the user's competence in the gaming activities. Computerized testing coupled with expert weightings are used to link gameplay to the test performance data, such that an in-game score correlates to a user's cognitive health. In FIG. 3 Step 320, if the game activity recipe is not validated, the process returns to collect more data for the user based on administration of psychological tests in Step 306, and refinement of the recipe for the user continues.

Those of ordinary skill in the art would appreciate that reverse engineering gameplay may apply to estimate cognition based on psychometric training.

In one or more embodiments of the invention, generating a recipe as described in FIG. 4 provides a clear manner to communicate the measurements of the user's performance on various tests and activities to a user. Further, embodiments of the invention make it easy to understand the training effect by comparing a recipe to a previously generated one to determine areas of improvement and/or areas of decline. Comparing between outputs from different sources, such as the outputs from the psychological (psychometric) test and the outputs from the gaming activities allows efficient updating of the recipe to obtain a robust calculation of performance and determine where a normal user's scores should lie.

In one or more embodiments of the invention, the methods described in FIGs. 3 and 4 facilitate the assessment and distribution of targeted stimulation to users that is embedded in specifically designed video games. Some of these users may be less than a mental health age of 8 years. To date, cognitive assessment using psychometric tests has been limited to ages 8 years and above. Thus this invention uniquely allows the specific assessment below 8 years and thus the selected targeting of cognition training in this age group. The targeting is made possible by the processing software that uses the unique recipe algorithm to normalize the measurement of cognition and link it with the video games to stimulate the brain where there is a deficit or weakness of cognition. Further, in one or more embodiments of the invention, as the number of users grow and as the data collected is increased, experts may decide that the weighting assigned to the various cognitive domains should be adjusted.

While the invention has been described with respect to a limited number of embodiments, those skilled in the art, having benefit of this disclosure, will appreciate that other embodiments can be devised which do not depart from the scope of the invention as disclosed herein. Accordingly, the scope of the invention should be limited only by the attached claims.

## Claims

1. A method for cognitive assessment and adaptive cognitive skills training, comprising:
obtaining a plurality of test performance results associated with a user based on a plurality of tests completed by the user;
generating a training recipe based on the test performance results and at least one selected from a group consisting of a plurality of test weights and a plurality of baseline distributions, each corresponding to the plurality of tests, wherein the plurality of test weights comprises a weight assigned to a plurality of cognitive domains tested by the plurality of tests;
identifying one of the plurality of cognitive domains of the user requiring improvement based on the test performance results;
obtaining, via an online video game played by the user, activity performance results associated with the user based on a training round completed by the user, wherein the training round comprises a plurality of video game activities in the online video game selected using the training recipe and specifically targeted to the cognitive domain of the user requiring improvement; and
presenting a report indicating a change in the cognitive domain of the user based on the plurality of tests and the plurality of activities.

2. The method of claim 1, wherein generating a training recipe comprises:
determining a latency and an error percentage of the user for each of the plurality of tests;
comparing the latency and the error percentage of the user in each of the plurality of tests to a baseline distribution obtained from an initial test data set; and
normalizing the latency and the error percentage of the user for each of the plurality of tests based on the percentile of the baseline distributions within which the user latency and error percentage fall to obtain a normalized cognitive health score for the user.

3. The method of claim 2, wherein a weighted average is applied to the normalized cognitive health score based on weights for each cognitive domain, and wherein a weighted average is applied to the activity performance results from the online video game using a plurality of activity performance weights to correlate the video game scores to the plurality of cognitive domains.

4. The method of claim 3, wherein the weights applied to the normalized results of the user for each of the plurality of tests are assigned and monitored by experts in the field.

5. The method of claim 1, wherein the latency and error percentage is measured by each keystroke performed by the user during the tests.

6. The method of claim 1, wherein the plurality of baselines is obtained from an initial test data set comprising psychological test results of a general population, and wherein the plurality of baselines is stored in a repository.

7. The method of claim 6, wherein an iterative process is employed to update and adjust the weights applied to the cognitive domains based on collection of data over time.

8. The method of claim 1, wherein results from the video gaming activities are correlated to the test performance data to obtain a relationship between the video gaming activities and cognitive health.

9. The method of claim 2, wherein a fit algorithm is applied to the weighted and normalized cognitive health score of the user to determine the weights for the video gaming activities.

10. The method of claim 3, further comprising:
iteratively feed the test performance results and normalized cognitive health score into the online video game to obtain the activity performance results, and
iteratively feed the activity performance results into the training recipe for the user,
wherein the test performance results and the activity performance results are used to adjust the plurality of test weights and the plurality of activity weights to keep the cognitive health scores within an expected range.

11. A system for cognitive assessment and adaptive cognitive skills training, comprising:
a network interface controller;
a memory; and
a computer processor, communicatively coupled to the network interface controller and the memory, for executing a cognitive training application configured to generate the user training recipes using the baseline distribution and the plurality of weights, wherein the cognitive training application is configured to:
obtain a plurality of test performance results associated with a user based on a plurality of tests completed by the user;
generate a training recipe based on the test performance results and at least one selected from a group consisting of a plurality of test weights and a plurality of baseline distributions, each corresponding to the plurality of tests, wherein the plurality of test weights comprises a weight assigned to the plurality of cognitive domains tested by the plurality of tests;
identify one of the plurality of cognitive domains of the user requiring improvement based on the test performance results;
obtain, via an online video game presented to the user on a webpage, activity performance results associated with the user based on a training round completed by the user, wherein the training round comprises a plurality of video game activities in the online video game selected using the training recipe and specifically targeted to the cognitive domain of the user requiring improvement;
present a report indicating a change in the cognitive domain of the user based on the plurality of tests and the plurality of activities.

12. The system of claim 11, wherein generating a training recipe comprises:
determining a latency and an error percentage of the user for each of the plurality of tests;
comparing the latency and the error percentage of the user in each of the plurality of tests to a general distribution obtained from an initial test data set; and
normalizing the latency and the error percentage of the user for each of the plurality of tests based on the percentile of the baseline distributions within which the user latency and error percentage fall to obtain a normalized cognitive health score for the user.

13. The system of claim 11, further comprising a data repository configured to store:
the plurality of test weights used to compute the weighted average of a cognitive health score of the user for each of the plurality of cognitive domains;
the plurality of baseline distributions with which the user's cognitive health score is compared to obtain a normalized cognitive health score of the user; and
a user profile for the user comprising user training recipes and the performance data comprising test performance results and activity performance results of the user obtained by playing the online video game.

14. The system of claim 13, wherein the cognitive training application is further configured to:
iteratively feed the test performance results and normalized cognitive health score into the online video game to obtain the activity performance results, and
iteratively feed the activity performance results into the training recipe for the user,
wherein the test performance results and the activity performance results are used to adjust the plurality of test weights and the plurality of activity weights to keep the cognitive health scores within an expected range.

15. A non-transitory computer-readable medium storing instructions, that when executed, perform a method for cognitive assessment and adaptive cognitive skills training, comprising:
obtaining a plurality of test performance results associated with a user based on a plurality of tests completed by the user;
generating a training recipe based on the test performance results and at least one selected from a group consisting of a plurality of test weights and a plurality of baseline distributions, each corresponding to the plurality of tests, wherein the plurality of test weights comprises a weight assigned to a plurality of cognitive domains tested by the plurality of tests;
identifying one of the plurality of cognitive domains of the user requiring improvement based on the test performance results;
obtaining, via an online video game presented to the user on a webpage, activity performance results associated with the user based on a training round completed by the user, wherein the training round comprises a plurality of video game activities in the online video game selected using the training recipe and specifically targeted to the cognitive domain of the user requiring improvement; and
presenting a report indicating a change in the cognitive domain of the user based on the plurality of tests and the plurality of activities.
